# EUROPEAN PATENT APPLICATION

(11) **EP 1 840 741 A1**
(43) Date of publication of application: **03.10.2007**
(21) Application number: 07004811.1
(22) Date of filing: 08.03.2007
(51) Int. Cl.: G06F 9/46

(54) **Device, method, and computer program product for accessing a non-native application executing in a virtual machine environment**

(30) Priority: 29.03.2006 US 277840
(71) Applicant: Nokia Corporation, 02150 Espoo (FI)
(72) Inventor: Biro, Jozsef, 1112 Budapest (HU); Boros, Andras, 1117 Budapest (HU)
(74) Representative: Becker Kurig Straus

(57) **Abstract**

Embodiments of the invention provide a virtual machine application program (VMAPI) interface logically disposed between a non-native application executing in the virtual machine environment and a native middleware application, such as a native high-availability middleware application. The VMAPI is registered as a proxy component with the native middleware application by creating a library instance. The non-native application is registered as a proxied component with the native middleware application by creating another dedicated library instance. A JVM mapper may be logically disposed between the native middleware and the VMAPI that is capable of automatically mapping the JVM to the Java components based on a mapping policy selected from a predefined set of possible mapping policies.

## Description

### FIELD OF THE INVENTION

Embodiments of the invention generally relate to middleware, such as high-availability middleware, and more particularly to the use of middleware, such as high-availability middleware, in a virtual machine environment.

### BACKGROUND OF THE INVENTION

As a general rule, the more complex a system is, the more likely it is that some error or failure in the operation of the system may occur. Unfortunately, some of the most complex software systems are used in applications which require a very high degree of reliability. For example, software in telecommunication systems is typically very complex, but is required to meet "carrier-grade" reliability standards. Carrier-grade is a term for telecommunications software that is 99.999 (or even 99.9999) percent reliable. Systems with such a high degree of reliability may also be termed "high-availability." High-availability of complex software systems may be achieved through the use of a high-availability (HA) middleware application, such as may conform to the Application Interface Specification (AIS) promulgated by the Service Availability^{™} Forum (SAF). SAF is a consortium of communications and computing companies working together to develop and publish high availability and management software interface specifications. AIS standardizes the interface between a SAF-compliant HA middleware and service applications that exploit the middleware to achieve high availability.

A SAF compliant HA middleware typically contains the following major elements, as mandated by AIS: (1) Availability Management Framework (AMF); (2) Cluster Membership Service; (3) Checkpoint Service; (4) Event Service; (5) Message Service; and (6) Lock Service; (7) Information Model Management Service; (8) Log Service; (9) and Notification Service. AMF is the software entity that provides service availability by coordinating redundant resources within a cluster to deliver a system with no single point of failure. Cluster Membership Service maintains membership information about the nodes. Checkpoint Service provides a facility for processes to record checkpoint data incrementally, which can be used to protect an application against failures. Event Service is a publish/subscribe multipoint-to-multipoint communication mechanism that is based on the concept of event channels: one or more publishers communicate asynchronously with one or more subscribers via events over a clusterwide entity, named event channel. Message Service provides a communication mechanism for processes on the same or on different nodes, with messages being written to and read from message queues. Lock Service is a distributed lock service, intended for use in a cluster, where processes in different nodes might compete with each other for access to a shared resource. Information Model Management Service manages the SAF information model: the different entities of an AIS cluster, such as components provided by AMF, checkpoints provided by the Checkpoint Service, or message queues provided by the Message Service are represented by various objects of the SAF information model. Log Service provides high level cluster-significant, function-based information suited primarily for network or system administrators, or automated tools to assist troubleshooting issues such as misconfigurations, network disconnects and unavailable resources. Notification Service is provided for system management purposes and is used by a service-user to report an event to a peer service-user. The list of services is extensible and likely to be expanded in the future to include additional services.

However, the key element of the AIS HA middleware is AMF, which supports various redundancy models for applications. The other services (listed above) are logically independent from AMF. AMF defines a system model consisting of the following key logical entities: cluster; node; service group; service unit; and component. A node is a logical representation of a physical node (typically a computer) that can run a single instance of an operating system (OS) and export SAF AIS application program interfaces (APIs). A cluster is a set of nodes that has the following characteristics: (1) the nodes have been configured as members of the cluster; (2) the nodes provide adequate support to run their application; (3) all nodes are capable of communicating with each other; and (4) all nodes are managed by a single Availability Management Framework.

In order to benefit from the AIS AMF to provide high-availability, an application must be organized into a set of components. AIS components (hereinafter "components") are the smallest entities on which the AMF performs error detection and recovery. Thus a component should include all functions that cannot be clearly separated for error containment or isolation purposes. A component is ideally composed of one operating system process, although it may include more than one process. This enables AMF to exploit the isolation provided by an operating system process to ensure the required isolation of AIS components.

Conceptually, the AIS HA middleware sees the application as a set of components. In practice, the AIS HA middleware communicates with the process(es) of the components using library instances. Library instances are dynamic associations between the processes and the AIS HA middleware. AIS HA middleware is able to support multiple library instances for each process if required.

Components are combined into service units. A service unit represents a higher level service and also provides a simplified coarser grained view of the application for system administrators. AIS HA middleware provides a redundancy model by organizing several identical service unit instances into service groups, with the exact arrangement depending on the selected redundancy model used. The service group instantiates the necessary number of active and standby service units. While a particular service unit instance is typically restricted to a single node, the service group is usually distributed among several nodes.

Application developers creating HA applications for the AIS HA middleware must provide the following artifacts for the proper deployment of their applications: (1) the code of AIS components (e.g., binary application code, .exe, .dll, etc.); and (2) a configuration description. The configuration description should contain: (1) a cluster description (i.e., a hierarchy of nodes, service units, and components); (2) supported redundancy (i.e., service groups and their redundancy models); and (3) component descriptors (e.g., component names, interfaces to control component lifecycle).

AIS is an API specification that defines a programming model for service applications written in the C programming language. AIS is not currently available in Java and, due to the fundamental differences between C and Java, there is no straightforward way to support AIS in Java. However, it is desirable to create a Java version of AIS to combine the benefits of Java and a standard framework supporting HA applications.

### BRIEF SUMMARY OF THE INVENTION

Generally described, embodiments of the invention provide a virtual machine application program interface (VMAPI) logically disposed between a non-native application executing in the virtual machine environment and a native high-availability middleware application. The VMAPI is registered as a proxy component with the native high-availability middleware application by creating a library instance. The non-native application is registered as a proxied component with the native high-availability middleware application by creating another dedicated library instance.

In this regard, a device for providing access to a non-native application executing in a virtual machine environment comprises a processing element configured to execute a virtual machine application, including a virtual machine application program interface (VMAPI), to create the virtual machine environment in which the non-native application is configured to execute. The processing element is further configured to execute a native middleware application. The VMAPI is logically disposed between the non-native application executing in the virtual machine environment and the native middleware application. The VMAPI is registered as a proxy component with the native middleware application, and the non-native application is registered by the VMAPI as a proxied component with the native middleware application. The VMAPI may be registered as a proxy component by creation of a library instance for the VMAPI, and the non-native application may be registered by the VMAPI as a proxied component by creation of an additional library instance for the non-native application.

In one embodiment, the VMAPI is configured to receive component process monitoring data from the virtual machine application and provide the component process monitoring data to the native middleware application.

The virtual machine application may comprise a Java virtual machine application creating a Java virtual machine environment, and the non-native application may comprise a Java application.

In one embodiment, the virtual machine application comprises a multi-application virtual machine application, such that the VMAPI is logically disposed between a plurality of non-native applications executing in the virtual machine environment and the native middleware application. Each of the plurality of non-native applications may be registered by the VMAPI as a proxied component with the native middleware application, such as by the creation of an additional library instance for each of the non-native applications.

The device may be configured to execute a virtual machine mapping application, the virtual machine mapping application logically disposed between the native middleware application and the virtual machine application. The virtual machine application may be configured to start and stop in response to commands from the virtual machine mapping application, with the commands to the virtual machine application based on commands from the native middleware application to start and stop the non-native application and further based on virtual machine mapping data.

In addition to the device for accessing a non-native application executing in a virtual machine environment as described above, other aspects of the invention are directed to corresponding methods and computer program products for accessing a non-native application executing in a virtual machine environment.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
**FIG. 1** is a schematic block diagram of a device capable of accessing a non-native application executing in a virtual machine environment, according to one embodiment of the invention; and
FIG. 2 is a flowchart of a method of accessing a non-native application executing in a virtual machine environment, according to one embodiment of the invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Embodiments of the invention will be described herein in terms of native HA middleware applications conforming to the AIS specification. However, embodiments of the invention may be used with other native HA middleware applications, including non-AIS applications. Similarly, embodiments of the invention will be described herein in terms of Java virtual machines and Java non-native applications. However, embodiments of the invention may be used with other (i.e., non-Java) virtual machines and non-native applications. As used herein, the term "native" is used to describe applications executing on the native OS of the device without any external support (i.e., without being emulated), while the term "non-native" is used to describe applications executing in a virtual machine environment.

One possible solution to enable AIS HA middleware to work with Java applications involves building the Java AIS implementation on top of an existing native AIS implementation. The Java interface will be provided by a thin Java wrapper layer (i.e., a Java AIS API). This would allow the Java method calls to be converted into corresponding native AIS calls with minimal processing on the Java side.

One of the technical problems in creating Java support for AIS is the placement of the Java Virtual Machine (JVM) in the system model of the AMF. AMF specifies several logical entities that are part of the application(s) handled by the framework. However, only one layer of execution is assumed in the model presented by the AIS specification. The node represents this single layer, which provides adequate support to run application processes. In other words, the node contains the operating system, and all other logical entities are applications (or groups of applications) executed by the operating system.

However, a Java Virtual Machine (JVM) introduces a second layer of execution. Like all virtual machines, the JVM is both an application (typically a single process) executed by the operating system and an execution environment in which Java applications execute. Furthermore, the Java applications are invisible to the operating system because the Java applications are executing in the virtual machine environment rather than in the OS. The following SAF AIS logical entities may be logical candidates for hosting a JVM: process (where the process is not the same as the component); component; service unit; node; service group; and cluster. The mapping of the JVM to some of these logical entities places special requirements on the JVM itself. In particular, these special requirements are: (1) the number of supported Java applications; and (2) the number of nodes on which the JVM is able to execute. Thus, it will typically be necessary to group the relevant AIS entities according to the requirements they impose on the VM. There are three basic types of virtual machines: (1) a standard JVM which executes on a single node and supports a single application; (2) a multi-application JVM which executes on a single node and supports two or more applications; and (3) a distributed JVM which executes on more than one node. A standard JVM can be mapped to processes or components. A multi-application JVM can be mapped to processes, components, service units, or nodes. A distributed JVM can be mapped to processes, components, service units, nodes, service groups, or clusters.

A standard JVM executes on a single computer, runs in a single operating system process, and supports a single Java application (assuming an application model in which applications are isolated from each other the same way as OS processes are isolated from each other). The usage of a standard JVM in AIS is limited by the fact that AIS requires that components must be separated from other components for error containment purposes. While using a standard JVM represents a natural way to implement Java AIS API, a drawback of this approach is that the number of components (or processes) in a HA application can be quite high, and the high number of JVM instances (one per component) can negatively influence the memory footprint of the application.

The usage of a multi-application JVM offers a potential improvement over a standard single-application JVM for an implementation of AIS HA middleware. Using a multi-application JVM, one could theoretically map a single JVM to each node, thereby offering a solution to the footprint problem of the standard JVM discussed above. However, the use of a multi-application JVM introduces another conceptual problem because the native AIS HA middleware assumes that a native process always belongs to a single component. Although AIS allows one process to have more than one library instance, these instances still must belong to the same component. Unfortunately, in the proposed mapping, the native AIS sees only a single process, i.e., the process of the JVM. Thus, the native AIS cannot register the Java components executing in the JVM environment. This conceptual problem is the manifestation of constrained visibility between two different layers of execution-the node CPU and the operating system represent one (i.e., native) layer and the JVM and the associated Java APIs represent the other (i.e., Java) layer. An entity of one layer (the native AIS HA middleware) cannot see entities (Java components) of the other layer.

AMF supports the concept of proxy components and proxied components. Several Component subtypes are defined by the AMF system model. Components can be local (i.e., execute on a node) or external (i.e., execute on hardware that is not part of the Cluster). Local components can be SA-aware (i.e., fully integrated with AIS and using the full AIS API) or non-SA-aware (i.e., components that do not register directly with the AMF and therefore cannot directly use the AIS API). All external components would be non-SA-aware. Non-SA-aware components are typically registered with the AMF by dedicated SA-aware components, which act as proxies between the AMF and the non-SA-aware components. These dedicated SA-aware components are called "proxy components." The components for which a proxy component mediates are called "proxied components." Proxied components interact with AMF only indirectly, via the corresponding proxy component. Only a subset of the AMF API is supported by proxy components. The proxy scheme is supported by AIS mainly for two purposes: for representing external components and for representing legacy code running on the node as a non-SA-aware component.

Embodiments of the invention extend the usage of the AIS proxy scheme to Java components. Since the JVM is a single process and the native AIS HA middleware allows only one SA-aware component per a single process, the Java AIS API itself will be considered to be this single SA-aware component. However, the Java AIS API will be registered as a proxy component and thus will be able to represent the Java components as proxied components executed by the JVM. This will enable the Java AIS API to propagate all AIS API functionality, not only a limited subset, to the Java components. In other words, the Java components will function as normal SA-aware components. As AIS allows more than one library instance per component (and per process), the Java AIS API will create a dedicated library instance for each Java component. Each dedicated library instance will register the Java component (as a proxied component) and will propagate calls between the native AIS and the proxied Java component.

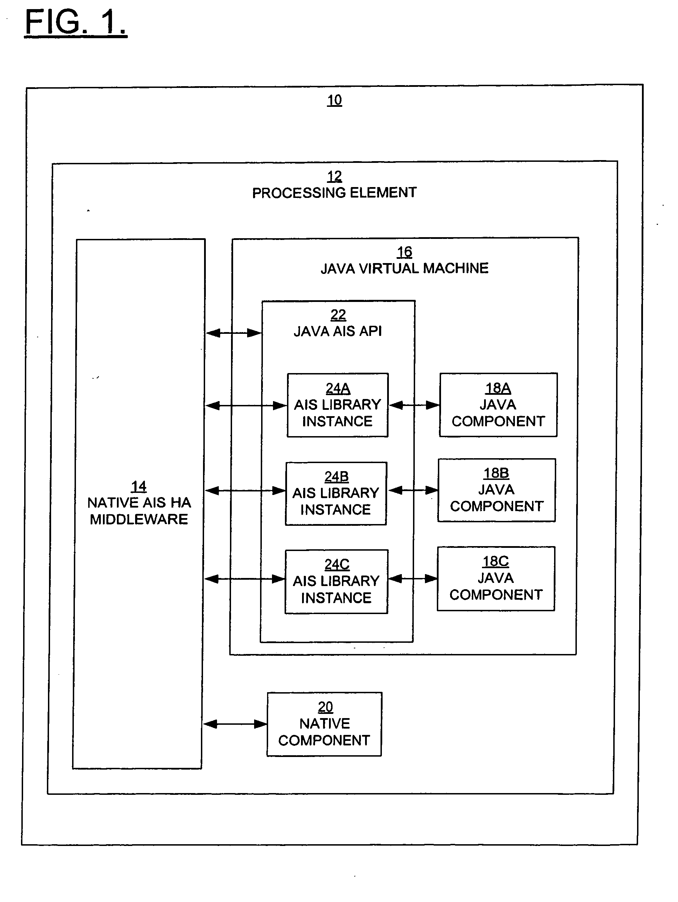

Referring now to FIG. 1, a device entity capable of providing high-availability of a non-native application executing in a virtual machine environment is illustrated, according to one embodiment of the invention. The device 10 may be a node, which would typically be a computing device such as a server or personal computer. The device may be grouped in a service group and/or a cluster with other devices. Several components may be executing on a processing element 12 within the device as part of a software system for which high-availability is required. While the processing element 12 can be configured in various manners, the processing element may be comprised of a microprocessor, controller, dedicated or general purpose electronic circuitry, a suitably programmed computing device, or other means for executing native and virtual machine applications. To enable high-availability, a native HA middleware application 14, such as may conform to the AIS standard, may be executing on the device. A native component 20 may be executing on the device 10, and would interface normally with the native HA middleware application 14. Additionally, a Java virtual machine 16 is executing on the device, and three Java components 18A, 18B, 18C are executing in the virtual machine environment of the exemplary embodiment. FIG. 1 illustrates a multi-application JVM, although a standard (i.e., single application) JVM would also benefit from embodiments of the invention. To enable the native HA middleware application 14 to interface with the Java components to provide high-availability, a Java AIS API 22 is logically disposed between the native HA middleware application 14 and the Java components. The Java AIS API 22 will register as a proxy component by creating a library instance (not illustrated). The Java AIS API will register the Java components 18A, 18B, 18C as proxied components by creating a dedicated library instance 24A, 24B, 24C for each Java component.

The native HA middleware application 14 will see four components-one (the Java AIS API 22) as a proxy component and three (the Java components 18A, 18B, 18C) as proxied components. The Java components are proxied components from the point of view of the native HA middleware application. As such, the AMF services provided explicitly for them by the native HA middleware application (via the proxy component) would be limited to the following AMF services: lifecycle control; HA state control; component health monitoring; and error reporting. The native AMF services not available for proxied components would typically be limited to the following: component process monitoring and protection group management.

Providing the protection group management AMF service may be accomplished via the library instances dedicated to the Java components. The library instances 24A, 24B, 24C will be able to claim native AMF services related to protection group management directly. The native HA middleware application 14 will believe that these services are requested by the proxy component (i.e., the Java AIS API 22) to which the library instances 24A, 24B, 24C officially belong. However, the services will be propagated by the library instances to the appropriate Java components.

Component process monitoring (i.e., passive monitoring of the process(es) of a component) can be requested by a component. Component process monitoring instructs the AMF to use OS services to monitor the health of the processes belonging to the component. However, process monitoring is not a service that can be provided meaningfully by the AMF to the Java components, since the Java components do not have OS processes. However, a service analogous to the AMF component process monitoring may be provided by incorporating similar functionality in the Java AIS API 22. As the multi-application JVM 16 may be capable of monitoring the Java applications, the Java AIS API 22 can request that the JVM monitor the Java applications and report errors in Java processes. The Java AIS API can report these errors to the native AIS HA middleware 14. Although described as component process monitoring, the JVM may be able to report errors of component sub-entities other than "processes."

Other AIS services (e.g., cluster membership, checkpoint, etc.) can be simply propagated between the native AIS HA middleware and the proxied components using service-specific library instances, without additional logic in the Java AIS API.

The JVM proxy component (most precisely the Java AIS API 22) would typically need to be part of a service unit and a service group. There will typically be a JVM service unit for each node (containing only one component, i.e., the JVM) and a JVM service group that will contain all JVM service units of the cluster. The redundancy model of the JVM service group can depend on the selected redundancy model of the application, although the JVM service group typically does not need to use the same redundancy model. The JVM service group represents a kind of platform/implementation service, which does not provide any application service. Application service is typically provided only by the Java components executed by the JVMs. The Java components will be part of other service units and service groups. This would typically mean that, if a native application is ported to Java, the components/service units/service groups of the native implementation can be copied into Java components/service units/service groups. Additionally, a JVM service group typically must be added to the AIS configuration.

Embodiments of the invention enable the implementation of the Java AIS API using a multi-application JVM. This enables one JVM to be mapped to an entire node or to a service unit. Such mappings typically require fewer JVM instances than mappings which use a single-application JVM (i.e., one JVM per component/process), therefore the memory footprint required by Java components is reduced.

Using a multi-application JVM enables additional JVM mapping configurations. For example, a single JVM may be mapped to each node or to each service unit. Both of these mapping configurations offer a desirable solution to the memory footprint problem experienced when a JVM supports a single application only. Since the native AIS framework is not aware of the Java application(s) and the Java AIS API executes within the JVM, it is the software developer's responsibility to ensure that the JVM and the Java applications are started, executed and stopped as required by the selected JVM mapping. This can be ensured by appropriately writing the configuration description for the application. This description can differ significantly depending on the selected JVM mapping.

A new element (which may be termed a "JVM mapper") may be added to the native AIS HA middleware, or logically disposed between the native AIS HA middleware and the JVM AIS API, that is capable of automatically mapping the JVM to the Java components. The automatic mapping may be based on a mapping policy selected from a predefined set of possible mapping policies. The JVM mapper may eliminate the burden on the application developers to provide detailed JVM specific configuration information.

A basic set of possible mapping policies may, for example, include: (1) one component to one JVM; (2) one process to one JVM; (3) one service unit to one JVM (using a multi-application JVM); and (4) one node to one JVM (using a multi-application JVM). Additionally, more complex mapping policies may offer a combination of the above basic policies, optimized for various attributes, e.g. reliability, footprint, speed, etc.

The JVM mapper would also control the JVM lifecyle, such that the JVM mapper would start and stop the JVM based on commands from the native HA middleware application to start and stop the Java application and further based on the mapping configuration. For example, consider a one-to-one mapping between a Java component and a JVM. In this situation, the JVM mapper would start a JVM when the native HA middleware commands any Java component to start and should stop a running JVM whenever the JVM's embedded Java component is commanded to stop by the native HA middleware.

In another example, consider a one-to-one mapping between a node and a JVM. In this situation, the JVM mapper would start only one JVM when the first Java component on the node is commanded to start by the native HA middleware. The JVM mapper would stop the JVM when the last running Java component on the node is commanded to stop by the native HA middleware. Starting and stopping the Java components would typically be accomplished by instructing the already executing JVM to start/stop the component.

In a more complex example, consider a one-to-one mapping between a service unit and a JVM. In this situation, the JVM mapper would start a new JVM whenever a new service unit is commanded to start and should stop the JVM when the last running Java component belonging to a service unit is commanded to stop.

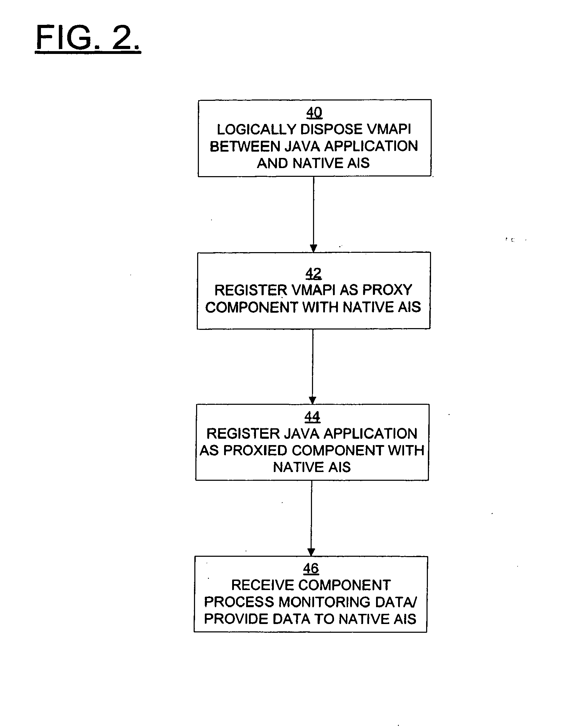

Referring now to FIG. 2, a flowchart of a method of providing high-availability of a non-native application executing in a virtual machine environment is illustrated, according to one embodiment of the invention. To enable the native HA middleware application to interface with the Java components to provide high-availability as described above, a Java AIS API is logically disposed between the native HA middleware application and the Java components. See block 40. The Java AIS API will register as a proxy component with the native AIS HA middleware by creating a library instance. See block 42. The Java AIS API will register the Java components as proxied components with the native AIS HA middleware by creating a dedicated library instance for each Java component. See block 44. This will enable a subset of the AMF services (i.e., lifecycle control, HA state control, component health monitoring, error reporting, and protection group management) to be provided for the Java components by the native HA middleware application via the Java AIS API (i.e., the proxy component). A service analogous to the AMF component process monitoring service may be enabled by having the multi-application JVM monitor the Java applications and provide component process monitoring data to the Java AIS API which can then report errors in Java processes to the native AIS HA middleware. See block 46. As discussed above, the JVM may be able to report errors of component sub-entities other than "processes." Although described in terms of a multi-application JVM and multiple Java applications, a single Java application executing in a standard (i.e., single application) JVM would also benefit from embodiments of the invention.

According to one exemplary aspect of the invention, the functions performed by one or more of the entities of the system, such as device 12, may be performed by various means, such as hardware and/or firmware, including those described above, alone and/or under control of a computer program product. The computer program product for performing the methods of embodiments of the invention includes a computer-readable storage medium, such as the non-volatile storage medium, and computer-readable program code portions, such as a series of computer instructions, embodied in the computer-readable storage medium.

In this regard, FIG. 2 is a flowchart of methods and program products according to the invention. It will be understood that each step of the flowchart, and combinations of steps in the flowchart, can be implemented by computer program instructions. These computer program instructions may be loaded onto a computer or other programmable apparatus to produce a machine, such that the instructions which execute on the computer or other programmable apparatus create means for implementing the functions specified in the flowchart step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowchart step(s). The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the functions specified in the flowchart step(s).

Accordingly, steps of the flowchart support combinations of means for performing the specified functions, combinations of steps for performing the specified functions and program instruction means for performing the specified functions. It will also be understood that each step of the flowchart, and combinations of steps in the flowchart, can be implemented by special purpose hardware-based computer systems which perform the specified functions or steps, or combinations of special purpose hardware and computer instructions.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A device for providing access to a non-native application executing in a virtual machine environment, wherein the device comprises:
a processing element configured to execute a virtual machine application, including a virtual machine application program interface (VMAPI), to create the virtual machine environment in which the non-native application is configured to execute; the processing element further configured to execute a native middleware application;
wherein the VMAPI is logically disposed between the non-native application executing in the virtual machine environment and the native middleware application; wherein the VMAPI is registered as a proxy component with the native middleware application; and wherein the non-native application is registered by the VMAPI as a proxied component with the native middleware application.

2. The device of claim 1, wherein the VMAPI is registered as a proxy component by creation of a library instance for the VMAPI; and wherein the non-native application is registered by the VMAPI as a proxied component by creation of an additional library instance for the non-native application.

3. The device of claim 1, wherein the VMAPI is configured to receive component process monitoring data from the virtual machine application and provide the component process monitoring data to the native middleware application.

4. The device of claim 3, wherein the virtual machine application comprises a Java virtual machine application creating a Java virtual machine environment, and wherein the non-native application comprises a Java application.

5. The device of claim 1, wherein the virtual machine application comprises a multi-application virtual machine application, and wherein the VMAPI is logically disposed between a plurality of non-native applications executing in the virtual machine environment and the native middleware application, and wherein each of the plurality of non-native applications is registered by the VMAPI as a proxied component with the native middleware application.

6. The device of claim 5, wherein each of the plurality of non-native applications is registered by the VMAPI as a proxied component by creation of an additional library instance for each of the non-native applications.

7. The device of claim 1, wherein the device is configured to execute a virtual machine mapping application, the virtual machine mapping application logically disposed between the native middleware application and the virtual machine application; and wherein the virtual machine application is configured to start and stop in response to commands from the virtual machine mapping application, the commands to the virtual machine application based on commands from the native middleware application to start and stop the non-native application and further based on virtual machine mapping data.

8. A method of accessing a non-native application executing in a virtual machine environment created by a virtual machine application, wherein the method comprises:
providing a virtual machine application program interface (VMAPI) that is logically disposed between the non-native application configured to execute in the virtual machine environment and a native middleware application;
registering the VMAPI as a proxy component with the native middleware application; and
registering the non-native application as a proxied component with the native middleware application.

9. The method of claim 8, wherein registering the VMAPI as a proxy component comprises creating a library instance for the VMAPI; and wherein registering the non-native application as a proxied component comprises creating an additional library instance for the non-native application.

10. The method of claim 8, further comprising:
receiving at the VMAPI component process monitoring data from the virtual machine application; and
providing the component process monitoring data to the native middleware application.

11. The method of claim 8, wherein the virtual machine application comprises a Java virtual machine application creating a Java virtual machine environment; and wherein the non-native application comprises a Java application.

12. The method of claim 8, wherein the virtual machine application comprises a multi-application virtual machine application, and wherein providing the VMAPI comprises providing the VMAPI that is logically disposed between a plurality of non-native applications executing in the virtual machine environment and the native middleware application, and wherein registering the non-native application comprises registering each of the plurality of non-native applications as a proxied component with the native middleware application.

13. The method of claim 12, wherein registering each of the plurality of non-native applications as a proxied component comprises creating an additional library instance for each of the non-native applications.

14. The method of claim 8, further comprising:
starting and stopping the virtual machine application in response to commands from a virtual machine mapping application logically disposed between the native middleware application and the virtual machine application, the commands to the virtual machine application based on commands from the native middleware application to start and stop the non-native application and further based on virtual machine mapping data.

15. A computer program product for accessing a non-native application executing in a virtual machine environment created by a virtual machine application, the computer program product configured to be logically disposed between a non-native application configured to execute in the virtual machine environment and a native middleware application, the computer program product comprising at least one computer-readable storage medium having computer-readable program code portions stored therein, the computer-readable program code portions comprising:
a first executable portion configured to register the computer program product as a proxy component with the native middleware application; and
a second executable portion configured to register the non-native application as a proxied component with the native middleware application.

16. The computer program product of claim 15, wherein the first executable portion is configured to register the computer program product as a proxy component by creating a library instance for the computer program product; and wherein the second executable portion is configured to register the non-native application as a proxied component by creating an additional library instance for the non-native application.

17. The computer program product of claim 15, further comprising:
a third executable portion configured to receive component process monitoring data from the virtual machine application; and
a fourth executable portion configured to provide the component process monitoring data to the native middleware application.

18. The computer program product of claim 15, wherein the virtual machine application comprises a Java virtual machine application creating a Java virtual machine environment, and wherein the non-native application comprises a Java application.

19. The computer program product of claim 15, wherein the virtual machine application comprises a multi-application virtual machine application, and wherein the computer program product is configured to be logically disposed between a plurality of non-native applications executing in the virtual machine environment and the native middleware application, and wherein the second executable portion is configured to register each of the plurality of non-native applications as a proxied component with the native middleware application.

20. The computer program product of claim 19, wherein the second executable portion is configured to register each of the plurality of non-native applications as a proxied component by creating an additional library instance for each of the non-native applications.

21. A computer program product for controlling a virtual machine application in response to commands from a native middleware application, the computer program product configured to be logically disposed between the virtual machine application and the native middleware application, the computer program product comprising at least one computer-readable storage medium having computer-readable program code portions stored therein, the computer-readable program code portions comprising:
a first executable portion configured to receive commands from the native middleware application to start and stop a non-native application and further based on virtual machine mapping data; and
a second executable portion configured to start and stop the virtual machine application in response to the received commands.
